# NEUE EUROPÄISCHE PATENTSCHRIFT

(11) **EP 0 857 442 B2**
(45) Veröffentlichungstag und Bekanntmachung des Hinweises auf die Entscheidung über den Einspruch: **26.09.2007**
(45) Hinweis auf die Patenterteilung: 11.09.2002
(21) Anmeldenummer: 97118877.6
(22) Anmeldetag: 30.10.1997
(51) Int. Cl.: A47B 95/04

(54) **Verfahren zum Herstellen einer Profilleiste, insbesondere einer Kantenleiste für die Möbelindustrie**
Method of making a profiled strip, in particular for an edge profile for the furniture industry
Procédé de fabrication d'un listeau de finition, en particulier d'un listeau de bordure pour l'industrie du meuble

(30) Priorität: 18.01.1997 DE 19701594
(43) Veröffentlichungstag der Anmeldung: 12.08.1998
(73) Patentinhaber: W. Döllken & Co. GmbH, 45964 Gladbeck (DE)
(72) Erfinder: Würz, Peter-Ludwig, 48712 Gescher (DE); Bröckermann, Heinz-Jürgen, 45149 Essen (DE)
(74) Vertreter: Albrecht, Rainer Harald

(56) Entgegenhaltungen:
- DE-A- 3 802 396
- DE-C- 3 732 810
- DE-U- 9 015 079
- DE-U- 9 407 401
- DE-U- 9 417 901
- GB-A- 606 594

## Beschreibung

Die Erfindung betrifft ein Verfahren zum Herstellen einer Kantenleiste für die Möbelindustrie, aus Kunststoff, wonach als Leistenkern eine durchsichtige Kunststoffleiste erzeugt wird, und wonach eine Dekorbeschichtung oder Farbbeschichtung auf die Unterseite der Kunststoffleiste aufgebracht wird. Im Rahmen der Erfindung kann der Kunststoff ein thermoplastischer und/oder duroplastischer Kunststoff sein.

Man kennt Profilleisten und insbesondere Kantenleisten aus thermoplastischem Kunststoff für die Möbelindustrie, die einen marmorierten Leistenkern und eine Auflage mit Holzmaserung auf zumindest einer Sichtseite aufweisen. Derartige Profil- bzw. Kantenleisten dienen zum Dekorieren von vorzugsweise Möbeloberflächen. Sie werden regelmäßig mit einem Möbelteil, zum Beispiel mit einer Holzplatte oder Holzwerkstoffplatte, bei der es sich um eine Spanplatte oder Faserplatte handeln kann, verklebt. Die Profil- bzw. Kantenleisten müssen häufig aus Anpassungsgründen nachträglich spanabhebend bearbeitet werden. Das gilt insbesondere für die obenliegenden Sichtkanten der Profil- bzw. Kantenleisten.

Im Wege der spanabhebenden Bearbeitung werden zwangsläufig die dekorativen Schichten im Bereich der Sichtkanten entfernt. Es kommt dann der Leistenkern zum Vorschein, der regelmäßig eine andere Strukturierung und/oder Färbung aufweist. Das stört in optischer und insbesondere ästhetischer Hinsicht. Darüber hinaus weisen die bekannten Profil- bzw. Kantenleisten im Allgemeinen störende Ränder auf, die sich von der dekorativen Struktur des Leistenkerns unterscheiden, so dass beim Verarbeiten der Profil- bzw. Kantenleisten ein sogenannter Bilderrahmen-Effekt entsteht. Um einen solchen Bilderrahmen-Effekt zu vermeiden, ist eine aufwendige Putzbearbeitung der Ränder erforderlich. Im Übrigen stört bei den bekannten Profil- bzw. Kantenleisten bisweilen deren raue aufgerissene und defekte Oberfläche, wenn nämlich Dekorpartikel in die Leistenoberfläche eingearbeitet sind, um beispielsweise einen Metalleffekt, eine Steinstruktur oder dergleichen hervorzurufen.

Mit Hilfe eines Verfahrens der eingangs beschriebenen Art werden im Rahmen der GB-A 606 594 Ornamentalartikel hergestellt. Diese verfügen über eine transparente Zwischenschicht zwischen einer transparenten Deckschicht und einer rückseitigen Schicht mit einem aufgedruckten Design.

Daneben kennt man ein Ornamentalband aus synthetischem Harz, welches durch gleichzeitiges Extrudieren von synthetischen Harzstreifen unterschiedlicher Farbe gebildet wird. Ein zugehöriger Basisstreifen ist in einem Abstand von äußeren Enden ausgeschnitten, wobei Endbereiche eines Schmuckstreifens und eines Deckstreifens zurückgepresst, -gefaltet oder schräg abgewinkelt werden (vgl. DE-A 38 02 396).

Schließlich wird in der DE-U 94 07 401 ein flächiges Objekt beschrieben, umfassend mindestens eine transparente Platte mit einer Vorderseite und einer Rückseite. Auf die Rückseite der Platte sind Fasern, Faserbündel, Faserverbünde etc. aufgebracht und von der Vorderseite her hinreichend kontrastiert sichtbar.

Der Erfindung liegt das technische Problem zugrunde, ein Verfahren anzugeben, wonach sich Kantenleisten für die Möbelindustrie mit glatter Oberfläche und ohne störende Ränder sowie mit beliebiger Dekor- und Farbgestaltung in rationeller und wirtschaftlicher Weise derart herstellen lassen, dass der optische Gesamteindruck bei Anpassung an den spezifischen Anwendungszweck durch eine nachträgliche Bearbeitung erhalten bleibt. Gleichzeitig soll eine entsprechend aufgebaute Profilleiste angegeben werden.

Diese Aufgabe löst die Erfindung durch in Verfahren gemäß Anspruch 1. Im Rahmen der Erfindung ist unter einer durchsichtigen Kunststoffleiste eine transparente oder transluzente Kunststoffleiste zu verstehen. Dekorbeschichtung kann im Rahmen der Erfindung auch eine Lackierung oder Kaschierung sein.

Diese Maßnahmen der Erfindung haben zur Folge, dass die Dekorbeschichtung auf der Unterseite der Kunststoffleiste eine beliebige Farb- und Dekorgestaltung mit Tiefenwirkung ermöglicht. So können sich ein Holzdekor ebenso wie ein Steindekor usw. verwirklichen lassen. Daran ändert auch eine nachträgliche spanabhebende Oberflächenbearbeitung der Kunststoffleiste nichts. Unansehnliche Farbunterschiede oder Dekorunterschiede im Zuge der spanabhebenden Bearbeitung der Profil- bzw. Kantenleiste sind nicht länger zu befürchten, weil die unterseitige Dekorbeschichtung stets erhalten bleibt und nicht beschädigt wird. Das durchsichtige Kunststoffprofil ist auch insoweit besonders vorteilhaft als keine von Farbe oder Dekor abweichenden Ränder vorhanden sind oder entstehen, so dass ein nachträgliches Beseitigen von Rändern im Wege von Putzarbeiten nicht länger erforderlich ist. Tatsächlich lassen sich die nach dem erfindungsgemäßen Verfahren hergestellten Profil- bzw. Kantenleisten ohne weiteres ohne sonst störenden Bilderrahmen-Effekt verarbeiten. Im Übrigen treten störende Randeffekte selbst dann nicht auf, wenn die Ränder einen Radius aufweisen, also nicht kantig ausgebildet sind. Vielmehr ist eine in geometrischer und optischer Hinsicht beliebige Gestaltung der Profil- und Kantenleisten nach dem erfindungsgemäßen Verfahren möglich.

Weitere vorteilhafte Ausgestaltungen sind im Folgenden aufgeführt. So sieht die Erfindung vor, dass in die Kunststoffleiste und/oder in die Unterseite der Kunststoffleiste Dekorpartikel und/oder Farbpigmente eingelagert werden. Es können Dekorpartikel verschiedenster Arten und Größen verwendet werden. Dadurch lassen sich besondere Metall- und Farbeffekte erreichen. Insbesondere durch die Einlagerung von Dekorpartikeln in die Nutzseite entstehen Tiefenwirkungen bei gleichzeitig glatter Oberfläche.

Weiter lehrt die Erfindung, dass auf die Oberseite und/oder die Unterseite der Kunststoffleiste eine Prägung aufgebracht wird, um auf diese Weise optische Effekte zu erzielen. In diesem Zusammenhang besteht auch die Möglichkeit, auf die Oberseite der Kunststoffleiste nach dem Aufbringen der Dekorbeschichtung auf die Unterseite eine Prägung aufzubringen oder nach dem Aufbringen einer Dekorbeschichtung auf die Oberseite und/oder Nutzseite eine Prägung auf die Oberseite aufzubringen. Das Aufbringen einer solchen Prägung gelingt mit Prägewalzen.

Nach einer vorteilhaften Ausführungsform, ist vorgesehen, dass zur Bildung der Dekorbeschichtung ein Farbdruck auf die Unterseite der Kunststoffleiste aufgebracht wird, so dass über die Druckfarbe jede beliebige Farbgebung aber auch Maserung, Marmorierung usw. möglich ist. Für den Farbdruck kann auch ein Haftvermittler als Druckfarbe oder eine Druckfarbe als Haftvermittler verwendet werden. Ein solcher Haftvermittler ist regelmäßig erforderlich, um die Profil- bzw. Kantenleisten mit Hilfe eines Heißklebers mit beispielsweise Möbelteilen aus Holz, Holzwerkstoffen oder Kunststoffwerkstoffen zu verkleben.

Nach einer anderen Ausführungsform der Erfindung besteht aber auch die Möglichkeit, zur Bildung der Dekorbeschichtung eine Dekorfolie aus Kunststoff oder Papier oder Metall zu verwenden, weil eben der Untergrund der transparenten bzw. transluzenten Kunststoffleiste zu einer beliebigen Farboder Dekorgestaltung herangezogen werden kann. Bei der Dekorfolie kann es sich um eine Heißsiegel- oder Thermofolie handeln. Die Kunststoffleiste kann ebenso wie die Dekorfolie aus Kunststoff, wie beispielsweise Polyvinylchlorid (PVC), Polypropylen (PP) oder dergleichen bestehen.

Gegenstand der Erfindung ist auch eine Profilleiste, wie sie im Patentanspruch 8 und den Folgeansprüchen 9 bis 14 beschrieben wird.

Im Folgenden wird die Erfindung anhand einer lediglich ein Ausführungsbeispiel darstellenden Zeichnung näher erläutert; es zeigen:

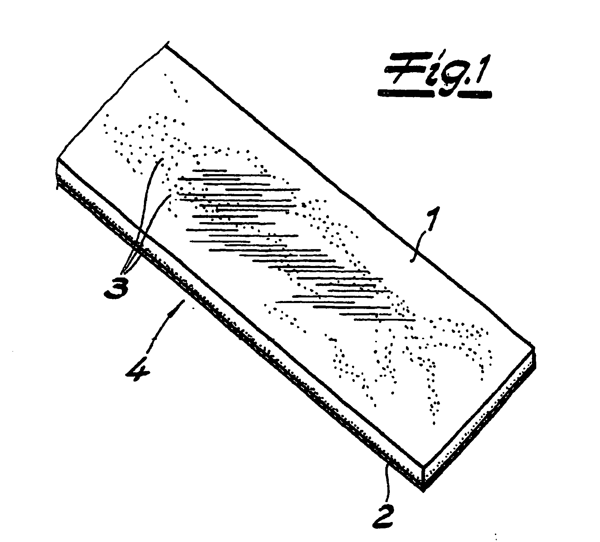

- Fig. 1: eine nach dem erfindungsgemäßen Verfahren hergestellte Kantenleiste ausschnittsweise und in perspektivischer Darstellung,

In Fig. 1 ist eine Kantenleiste dargestellt, die aus einer durchsichtigen, d. h. transparenten oder transluzenten Kunststoffleiste 1 und einer Dekorbeschichtung 2 auf der Unterseite dieser Kunststoffleiste 1 besteht. Außerdem sind zwischen der Kunststoffleiste 1 und der Dekorbeschichtung 2 eingebrachte Dekorpartikel 3 angedeutet, um einen Metalleffekt zu erzielen. Bei der Dekorbeschichtung 2 kann es sich um einen Farbdruck, eine Kunststofffolie oder Papierfolie mit den jeweils gewünschten Dekoreffekten handeln. Das Ausführungsbeispiel nach Fig. 1 macht unmittelbar deutlich, dass sich Sichtkanten 4 in farblicher und dekorativer Hinsicht nicht von der übrigen Kantenleiste unterscheiden, auch nicht nach einer spanabhebenden Bearbeitung, weil die unterseitige Dekorbeschichtung 2 unverändert erhalten bleibt und auf den Betrachter einwirkt.

Im Rahmen der Erfindung kann es sich bei den Dekorpartikeln grundsätzlich um farbige und insbesondere weiße Dekorpartikel handeln. Ferner können die Dekorpartikel beispielsweise mineralische oder metallische Partikel sein. Sie können aber auch aus thermoplastischem oder duroplastischem Kunststoff bestehen.

## Patentansprüche

1. Verfahren zum Herstellen einer Kantenleiste für die Möbelindustrie aus Kunststoff, wonach
- als Leistenkern eine durchsichtige Kunststoffleiste (1) erzeugt wird, wonach
- eine Dekorbeschichtung (2) oder Farbbeschichtung auf lediglich die Unterseite der Kunststoffleiste (1) aufgebracht wird, und wonach
- längsrandseitige Sichtkanten (4) der Kunststoffleiste (1) nachträglich profiliert werden.

2. Verfahren nach Anspruch 1, **dadurch gekennzeichnet, dass** in die Kunststoffleiste (1) und/oder in die Unterseite der Kunststoffleiste (1) Dekorpartikel (3) und/oder Farbpigmente eingelagert werden.

3. Verfahren nach Anspruch 1 oder 2, **dadurch gekennzeichnet, dass** auf die Oberseite und/oder die Unterseite der Kunststoffleiste (1) eine Prägung aufgebracht wird.

4. Verfahren nach einem der Ansprüche 1 bis 3, **dadurch gekennzeichnet, dass** auf die Oberseite der Kunststoffleiste (1) nach dem Aufbringen der Dekorbeschichtung (2) auf die Unterseite eine Prägung aufgebracht wird.

5. Verfahren nach einem der Ansprüche 1 bis 4, **dadurch gekennzeichnet, dass** zur Bildung der Dekorbeschichtung (2) ein Farbdruck auf die Unterseite der Kunststoffleiste (1) aufgebracht wird.

6. Verfahren nach Anspruch 5, **dadurch gekennzeichnet, dass** für den Farbdruck ein Haftvermittler als Farbe oder Druckfarbe verwendet wird oder eine Druckfarbe als Haftvermittler verwendet wird.

7. Verfahren nach einem der Ansprüche 1 bis 4, **dadurch gekennzeichnet, dass** zur Bildung der Dekorbeschichtung (2) eine Dekorfolie aus Kunststoff oder Papier oder Metall oder eine Heißsiegelfolie verwendet wird.

8. Kantenleiste für die Möbelindustrie aus Kunststoff, mit einem Leistenkern aus einer durchsichtigen Kunststoffleiste (1) und mit einer Dekorbeschichtung (2) oder Farbbeschichtung auf lediglich der Unterseite der Kunststoffleiste (1), wobei längsrandseitige Sichtkanten (4) der Kunststoffleiste (1) nachträglich profiliert sind.

9. Kantenleiste nach Anspruch 8, **dadurch gekennzeichnet, dass** in die Kunststoffleiste (1) und/oder die Unterseite der Kunststoffleiste (1) Dekorpartikel (3) und/oder Farbpigmente eingelagert sind.

10. Kantenleiste nach Anspruch 8 oder 9, **dadurch gekennzeichnet, dass** die Oberseite und/oder Unterseite der Kunststoffleiste (1) eine Prägung aufweist.

11. Kantenleiste nach einem der Ansprüche 8 bis 10, **dadurch gekennzeichnet, dass** die Dekorbeschichtung (2) als auf die Unterseite der Kunststoffleiste (1) aufgebrachter Farbdruck ausgebildet ist.

12. Kantenleiste nach Anspruch 11, **dadurch gekennzeichnet, dass** für den Farbdruck ein Haftvermittler als Farbe oder Druckfarbe verwendet wird oder eine Druckfarbe als Haftvermittler verwendet wird.

13. Kantenleiste nach einem der Ansprüche 8 bis 10, **dadurch gekennzeichnet, dass** die Dekorbeschichtung (2) als Dekorfolie aus Kunststoff oder Papier oder Metall oder als Heißsiegelfolie ausgebildet ist.

14. Kantenleiste nach einem der Ansprüche 8 bis 13, **dadurch gekennzeichnet, dass** die Kunststoffleiste (1) und/oder die Dekorfolie aus Kunststoff, aus PVC, PP oder dergleichen bestehen.

## Claims

1. Method for producing an edging strip for the furniture industry, from plastic, according to which
- a transparent plastic strip (1) is produced as the strip core, according to which
- a decorative coating (2) or colour coating is applied to only the underside of the plastic strip (1), and according to which
- visible edges (4) on the longitudinal side of the plastic strip (1) are subsequently profiled.

2. Method according to claim 1, **characterised in that** decorative particles (3) and/or colour pigments are embedded in the plastic strip (1) and/or in the underside of the plastic strip (1).

3. Method according to claim 1 or 2, **characterised in that** an embossing is applied to the upper side and/or the underside of the plastic strip (1).

4. Method according to one of claims 1 to 3, **characterised in that** an embossing is applied to the upper side of the plastic strip (1) after the application of the decorative coating (2) to the underside.

5. Method according to one of claims 1 to 4, **characterised in that** a colour print is applied to the underside of the plastic strip (1) in order to form the decorative coating (2).

6. Method according to claim 5, **characterised in that**, for the colour print, an adhesion promoter is used as the colour or printing ink or a printing ink is used as the adhesion promoter.

7. Method according to one of claims 1 to 4, **characterised in that** a decorative film made from plastic or paper or metal or a hot-seal film is used in order to form the decorative coating (2).

8. Edging strip for the furniture industry made from plastic, with a strip core consisting of a transparent plastic strip (1) and with a decorative coating (2) or colour coating on only the underside of the plastic strip (1), wherein visible edges (4) on longitudinal sides of the plastic strip (1) are subsequently profiled.

9. Edging strip according to claim 8, **characterised in that** decorative particles (3) and/or colour pigments are embedded in the plastic strip (1) and/or in the underside of the plastic strip (1).

10. Edging strip according to claim 8 or 9, **characterised in that** the upper side and/or the underside of the plastic strip (1) has an embossing.

11. Edging strip according to one of claims 8 to 10, **characterised in that** the decorative coating (2) is designed as a colour print applied to the underside of the plastic strip (1).

12. Edging strip according to claim 11, **characterised in that**, for the colour print, an adhesion promoter is used as the colour or printing ink or a printing ink is used as the adhesion promoter.

13. Edging strip according to one of claims 8 to 10, **characterised in that** the decorative coating (2) is designed as a decorative film made from plastic or paper or metal or as a hot-seal film.

14. Edging strip according to one of claims 8 to 13, **characterised in that** the plastic strip (1) and/or the decorative film are made from plastic, from PVC, PP or the like.

## Revendications

1. Procédé pour la fabrication d'une alaise pour l'industrie du meuble en matière plastique selon lequel
- une baguette en matière plastique (1) transparente est fabriquée comme noyau de la baguette, selon lequel
- un revêtement décoratif (2) ou un revêtement coloré est appliqué uniquement sur la face inférieure de la baguette en matière plastique (1), et selon lequel
- des chants visibles (4) des bords longitudinaux de la baguette en matière plastique (1) sont profilés ultérieurement.

2. Procédé selon la revendication 1, **caractérisé en ce que** des particules décoratives (3) et/ou pigments colorés sont intégrés dans la baguette en matière plastique (1) et/ou la face inférieure de la baguette en matière plastique (1).

3. Procédé selon la revendication 1 ou 2, **caractérisé en ce que**, sur la face supérieure et/ou la face inférieure de la baguette en matière plastique (1), un gaufrage est réalisé.

4. Procédé selon une des revendications 1 à 3,
**caractérisé en ce que**, sur la face supérieure de la baguette en matière plastique (1), après l'application du revêtement décoratif (2), un gaufrage est réalisé sur la face inférieure.

5. Procédé selon une des revendications 1 à 4,
**caractérisé en ce que**, pour former le revêtement décoratif (2), une impression colorée est appliquée sur la face inférieure de la baguette en matière plastique (1).

6. Procédé selon la revendication 5, **caractérisé en ce que**, pour l'impression colorée, un agent d'accrochage est utilisé comme encre ou encre d'impression ou qu'une encre d'impression est utilisée comme agent d'accrochage.

7. Procédé selon une des revendications 1 à 4,
**caractérisé en ce que**, pour former le revêtement décoratif (2), un film décoratif en matière plastique, en papier ou en métal ou un film collé à chaud est utilisé.

8. Alaise pour l'industrie du meuble, en matière plastique, avec un noyau de baguette en matière plastique transparente (1) et avec un revêtement décoratif (2) ou un revêtement coloré uniquement sur la face inférieure de la baguette en matière plastique (1), dans laquelle des chants visibles des bords longitudinaux (4) de la baguette en matière plastique (1) sont profilés ultérieurement.

9. Alaise selon la revendication 8, **caractérisée en ce que**, dans la baguette profilée (1) et/ou la face inférieure de la baguette en matière plastique (1), des particules décoratives (3) et/ou pigments colorés sont intégrés.

10. Alaise selon la revendication 8 ou 9, **caractérisée en ce que** la face supérieure et/ou inférieure de la baguette en matière plastique (1) présente un gaufrage.

11. Alaise selon une des revendications 8 à 10, **caractérisée en ce que** le revêtement décoratif (2) est réalisé en appliquant une impression colorée sur la face inférieure de la baguette en matière plastique (1).

12. Alaise selon la revendication 11, **caractérisée en ce que**, pour l'impression colorée, un agent d'accrochage est utilisé comme encre ou encre d'impression ou qu'une encre d'impression est utilisée comme agent d'accrochage.

13. Alaise selon une des revendications 8 à 10,
**caractérisée en ce que** le revêtement décoratif (2) est constitué d'un film décoratif en matière plastique, papier ou métal ou d'un film collé à chaud.

14. Alaise selon une des revendications 8 à 13,
**caractérisée en ce que** la baguette en matière plastique (1) et/ou le film décoratif sont fabriqués en matière plastique, en PVC, PP ou similaires.
